# FASCICULE DE BREVET EUROPEEN

(11) **EP 2 934 907 B1**
(45) Date de publication et mention de la délivrance du brevet: **19.02.2020**
(21) Numéro de dépôt: 13820838.4
(22) Date de dépôt: 19.12.2013
(51) Int. Cl.: B60B 1/08, B60B 25/00, B60B 37/10, B65F 1/14, B60C 7/24, B60B 5/02, B60B 33/00

(54) **ARRANGEMENT DE ROUE ET CHAPE DE ROUE POUR BAC DE COLLECTE**
ANORDNUNG VON RAD UND RADGEHÄUSE FÜR EINEN SAMMELWAGEN
ARRANGEMENT OF WHEEL AND WHEEL HOUSING FOR A COLLECTION WAGON

(30) Priorité: 20.12.2012 FR 1262505
(43) Date de publication de la demande: 28.10.2015
(73) Titulaire: SULO France, 69800 Saint-Priest (FR)
(72) Inventeur: OLLIER, Fabrice, F-01700 Miribel (FR); LETERRIER, Franck, F-01150 Lagnieu (FR)
(74) Mandataire: Remy, Vincent Noel Paul
(86) Numéro de dépôt international: PCT/FR2013/053207
(87) Numéro de publication internationale: WO 2014/096729

(56) Documents cités:
- FR-A- 910 044
- US-A- 3 565 490
- US-A- 5 806 878
- US-A1- 2004 181 907

## Description

La présente invention se rapporte au domaine des bacs de collecte de déchets munis de roues. Ces bacs de collecte comportent généralement une cuve en matière plastique, éventuellement munie d'un couvercle, au bas de laquelle sont montées des roues.

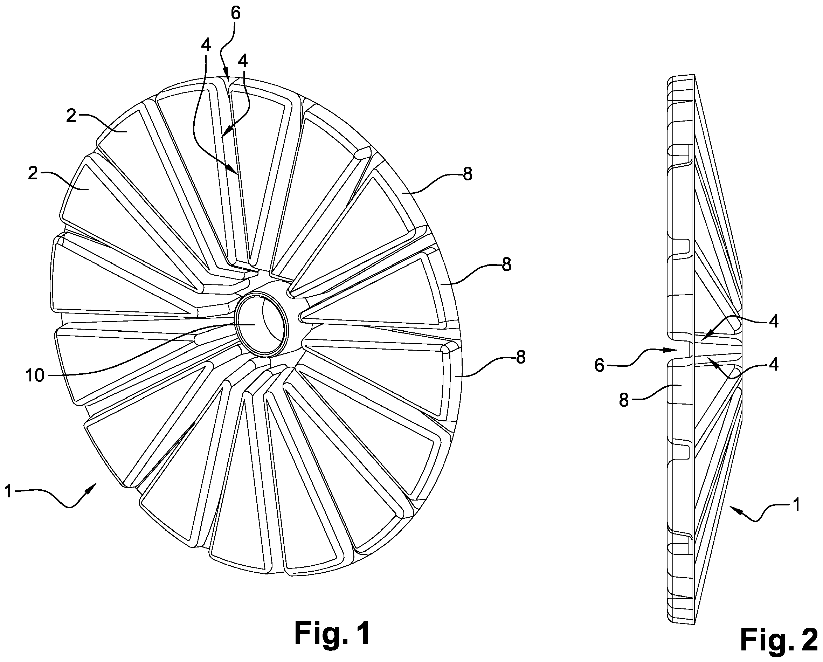

Parmi les bacs de collecte équipés de roues, on distingue deux grandes catégories : les bacs à deux roues et les bacs à quatre roues. La constitution des roues est en général identique sur les deux types de bacs. Comme montré sur la figure 1, une roue 1 comporte en général un moyeu 2 en matière plastique, destiné à être monté sur un essieu ou un axe, le moyeu 1 étant solidaire d'un voile formant une jante 3 sur laquelle est monté un bandage 4. La surface périphérique du bandage, généralement réalisée à partir de caoutchouc (éventuellement recyclé) forme la bande de roulement de la roue. Une roue de ce type est connue de US 2004/0181907 A1.

Les bacs de collecte sont quotidiennement déplacés et manipulés lors des opérations de collecte. Leurs déplacements sur les trottoirs et la chaussée occasionnent chocs et vibrations et rendent les bacs bruyants.

Cet aspect bruyant des bacs à roues est renforcé par le fait que, pour assurer une robustesse et une longévité suffisante aux roues, le bandage est généralement un élément massif et épais, ce qui le rend très peu déformable, même lorsqu'il est réalisé dans un matériau à base de caoutchouc. On dira qu'il s'agit alors de roues « de type à élastomère plein », pour se distinguer des roues « de type à pneumatique », qui utilisent un gonflage à l'air.

Dans une roue de type à élastomère plein, le bandage est donc peu amortissant et transmet à la cuve du bac, sans suffisamment les amortir, les chocs et vibrations qu'il subit, par l'intermédiaire de la jante et du moyeu qui sont généralement très rigides. En plus de l'aspect bruyant, la transmission à la jante et au moyeu des vibrations et chocs reçus par le bandage peut également mener à la destruction de ces derniers, en cas de sollicitations extrêmes ou répétées.

En outre, certains bacs, en particulier ceux comportant quatre roues, nécessitent des roues directionnelles. Dans ce cas, chaque roue est solidaire de la cuve par l'intermédiaire d'une chape métallique. Cette chape comporte un axe de pivotement vertical permettant l'orientation de la roue. La roue est constituée d'un moyeu et d'une jante en matière plastique et d'un bandage de roue en caoutchouc monté légèrement serré sur la jante.

Le bandage en caoutchouc est monté sur la jante par chaussage, c'est-à-dire en lui faisant subir un étirement le temps de franchir le bord d'une gorge périphérique de la jante, qui constitue le siège du bandage. Étant donné que le bandage doit être, une fois chaussé, serré sur la jante, il est nécessaire que son diamètre au repos soit légèrement inférieur au plus petit diamètre de la jante (qui correspond en général au fond de sa gorge périphérique), ce qui requiert de prévoir un bandage en caoutchouc suffisamment volumineux pour supporter une déformation élastique permettant de l'étirer élastiquement relativement beaucoup, en tout cas plus qu'il n'aura jamais besoin de s'étirer au cours de son utilisation.

En d'autres termes, le chaussage du bandage sur la jante oblige à un surdimensionnement du bandage, surdimensionnement qui n'est ensuite plus utile, au cours de la vie de la roue.

La présente invention a pour objet de pallier les inconvénients des solutions existantes, en proposant un arrangement de roue et chape de roue pour bac de collecte permettant de réduire drastiquement la génération de bruit lors du roulage, mais également de réduire le poids d'une telle roue, ainsi que la quantité de matière nécessaire à sa fabrication.

A cet effet, un objet de l'invention est un arrangement selon la revendication 1.

La présence du flanc en élastomère en partie centrale apporte une très grande souplesse par rapport à une pièce rigide en partie centrale, comme dans l'art antérieur. Par conséquent, il en résulte un roulement plus amorti, et un bruit de roulement très atténué par rapport à une roue selon l'art antérieur. De plus, la partie en élastomère ne subit aucune contrainte de traction, au montage comme en fonctionnement, mais seulement des contraintes de compression. Il en résulte qu'il n'est pas nécessaire que cette partie ait une résistance mécanique élevée permettant de résister à des contraintes de traction, ni de sur-dimensionner cette partie pour résister à ces contraintes. Ceci permet un gain de matière, donc de poids, et également la possibilité d'utilisation d'un élastomère essentiellement recyclé, à base par exemple de poudre de pneumatique(s) usagé(s).

Typiquement, dans une direction axiale, une épaisseur minimale du flanc est d'au moins 20% d'une largeur maximum de la bande de roulement, de préférence d'au moins 30%, et par exemple compris entre 35% et 70% d'une largeur maximum de la bande de roulement. Ainsi, on obtient un effet d'amortissement notable des vibrations et chocs, par rapport à un flanc mince. On peut par exemple utiliser une épaisseur minimale du flanc d'au moins 15 mm, ou d'au moins 20 mm, ou d'au moins 30 mm, et par exemple comprise entre 20 mm et 50 mm.

Les flasques sont avantageusement configurés pour, et destinés à réaliser une compression axiale du flanc suffisante pour sensiblement interdire un mouvement relatif flasques/flanc. Ceci conduit à un montage mécaniquement robuste, sans déplacements relatifs donc sans risques d'usure. La compression a aussi pour effet de rendre plus proéminente la partie centrale du flanc, la bande de roulement tendant à bomber vers l'extérieur, ce qui accroit la quantité de matière amortissante en contact avec le sol.

De préférence, le flanc est un flanc droit, ce qui signifie qu'il comprend un plan médian qui est sensiblement radial (par rapport à l'axe de la roue). Ceci permet de disposer ce flanc dans un plan radial médian de la roue.

Le flanc s'étend en général sur une hauteur radiale égale à au moins 50% ou d'au moins 60% d'un rayon maximum de la bande de roulement. Ceci augmente la dimension de la partie amortissante de la roue, en contact avec les flasques.

De façon préférée, chacun des deux flasques comprend des moyens d'engrènement du flanc, pour interdire une rotation différentielle entre l'un quelconque des flasques et la bande de roulement. Ceci permet d'éviter de façon mécanique toute rotation différentielle, ces moyens mécaniques étant plus efficaces que le seul frottement des flasques sur le flanc, du fait de la compression de ce flanc.

Avantageusement, les moyens d'engrènement des flasques comprennent, sur au moins un flasque, des nervures radiales conformées pour accroître la rigidité du flasque dans la direction axiale. Le flasque peut donc être plus mince, tout en exerçant un effort de compression suffisamment important sur le flanc. Les nervures, sensiblement radiales, rigidifient l'ensemble de la roue et augmentent sa capacité de charge, en fonctionnant en flexion.

Selon un mode de réalisation préféré, au moins une nervure d'un flasque comprend un évidement radial configuré pour encadrer sans jeu une nervure radiale sur le flanc.

Selon un autre mode de réalisation, c'est le flanc qui comprend au moins une nervure radiale comprenant un évidement radial configuré pour encadrer sans jeu une nervure radiale d'un flasque.

La bande de roulement est typiquement une couronne externe circonférentielle au flanc, formant un bord circonférentiel dépassant axialement du flanc de part et d'autre de celui-ci, les deux flasques étant engagés sous ce bord circonférentiel, de préférence sensiblement sans jeu, ou bien à jeu faible si l'on souhaite augmenter la souplesse lors du roulage.

La roue est montée dans une chape de roue ayant deux flancs (de chape), le flanc étant mis en compression axiale, par et entre les deux flasques, qui sont eux-mêmes mis en compression axiale, par et entre les deux flancs de la chape. Ainsi, la compression du flanc droit par les flasques de la roue est apportée par les flancs métalliques de la chape, sans qu'il soit besoin de mettre en œuvre de moyens de compression propres à la roue en elle-même. En d'autres termes la roue est dépourvue de moyens traversants (traversant ces flasques) de serrage des deux flasques entre eux.

Selon l'invention, au moins l'un, et généralement chacun des deux flasques est déformable axialement sous contrainte, de sorte que la longueur axiale de ce flasque est plus faible lorsque, dans la roue montée, il est mis en compression axiale par un flanc de la chape, que lorsque, dans la roue non montée, il n'est pas mis en compression. Ceci rend plus facile le montage de la roue dans la chape, en augmentant la flexibilité dimensionnelle axiale de l'assemblage formé par le flanc et les deux flasques.

De façon très préférée, chaque flasque déformable axialement sous contrainte comprend des nervures radiales qui s'engagent à leurs extrémités extérieures sous le bord circonférentiel, la compression axiale du flasque produisant une augmentation du diamètre extérieur de ces extrémités, qui viennent en appui sur une partie radialement intérieure dudit bord circonférentiel (le terme appui couvrant également le cas où les nervures produisent une certaine compression et extension radiale du bord circonférentiel).

Cet appui, éventuellement avec compression et extension radiale limitée du bord circonférentiel, a pour effets de rigidifier le bord circonférentiel, d'augmenter sa résistance au fluage, et d'augmenter la capacité de charge de la roue, une part notable de la charge exercée sur cette roue étant reprise par le flasque, au moyen de ses nervures radiales. Pour des charges importantes, on pourra avantageusement utiliser des flasques métalliques, de capacité de charge supérieure à celle des flasques en plastique moulé.

De préférence, la plus grande partie au moins, et de préférence la totalité de la masse du flanc et de la bande de roulement est formée par un élastomère recyclé, par exemple en caoutchouc obtenu à partir de poudre de pneumatique usagé, et chaque flasque est réalisé en plastique moulé.

L'invention concerne également un bac de collecte de déchets, de préférence à quatre roues de contenance comprise entre 400 et 1700 litres, bornes comprises, caractérisé en ce qu'il comprend au moins un arrangement tel que mentionné précédemment.

L'invention sera mieux comprise à la lecture de la description qui va suivre, donnée uniquement à titre d'exemple et faite en se référant aux dessins dans lesquels :
La figure 1 représente une vue en perspective d'un flasque d'une roue selon l'invention.
La figure 2 représente une vue en élévation du flasque de la figure 1.
La figure 3 représente une vue en perspective d'un élément formé d'un bandage de roulement et d'un flanc droit d'une roue selon l'invention.
La figure 4 représente une vue en élévation de l'élément de la figure 3.
La figure 5 représente une vue en perspective d'une roue selon l'invention.
La figure 6 représente une vue partielle en perspective d'un bac de collecte de déchets comprenant au moins une roue selon l'invention

On a représenté sur les figures 1 et 2, en perspective et en élévation, un flasque 1 d'une roue selon l'invention. Ce flasque en plastique moulé comprend des secteurs plans 2 s'étendant selon une direction principale radiale. Deux secteurs adjacents comprennent deux nervures radiales 4 conformées pour accroître la rigidité du flasque dans la direction axiale, chaque nervure formant un raidisseur. Deux de ces nervures adjacentes délimitent entre elles un évidement radial 6, destiné à chausser, c'est à dire à encadrer sans jeu, une nervure radiale d'un flanc droit de la roue, en élastomère. Les extrémités radiales des secteurs 2 forment un bord extérieur segmenté 8 destiné à être engagé dans une partie correspondante d'un élément en élastomère. Le flasque 1 comprend également, dans une partie centrale 10 un tronc de cylindre destiné à entourer un fourreau à haute résistance mécanique, par exemple en acier, formant palier pour un axe de la roue. La jante est formée par l'ensemble de deux flasques montés en opposition autour d'un élément en élastomère.

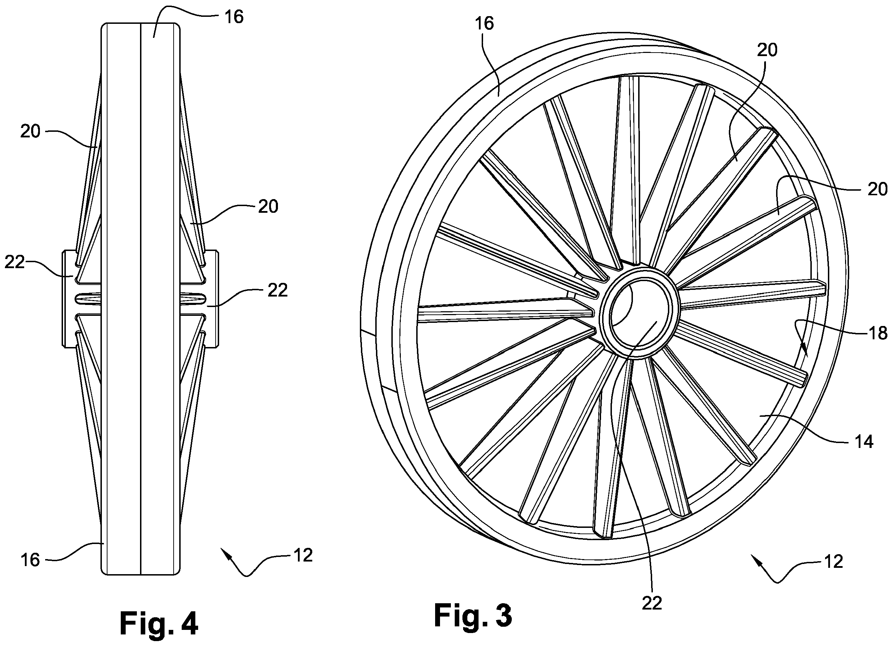

On a représenté sur les figures 3 et 4, en perspective et en élévation, un élément 12 en un seul tenant en élastomère (typiquement en caoutchouc provenant de pneumatique(s) recyclé(s)). Cet élément 12 comprend un flanc droit 14, venu de matière avec une bande de roulement 16 qui est une couronne externe circonférentielle au flanc droit 14 formant un bord circonférentiel 18 dépassant axialement du flanc droit 14 de part et d'autre de celui-ci, les deux flasques 1 étant destinés à être engagés sous ce bord circonférentiel, par l'intermédiaire de leur bord extérieur segmenté 8. Le flanc droit 14 comprend des nervures radiales 20 s'étendant, comme le flanc droit lui-même, depuis une partie centrale 22 formée par un tronc de cylindre destiné à recevoir les troncs de cylindre des deux flasques. Les nervures radiales 20 sont destinées à rentrer et être encadrées sans jeu dans les évidements radiaux 6 des deux flasques, de façon à ce que les flasques engrènent le flanc droit 14, interdisant toute rotation différentielle entre ce flanc droit 14 et les flasques 1.

Les évidements radiaux 6 des deux flasques apportent de la rigidité aux flasques mais conservent de préférence une certaine souplesse permettant une réduction de la longueur axiale de chacun des flasques, sous contrainte axiale. Ceci permet un montage plus aisé de la roue dans la chape de roue.

Comme on peut le voir sur la figure 4, l'élément 12 en élastomère est symétrique par rapport à un plan médian, de façon à ce qu'un flasque puisse être engagé de part et d'autre de cet élément, pour mettre ce flanc en compression entre les deux flasques.

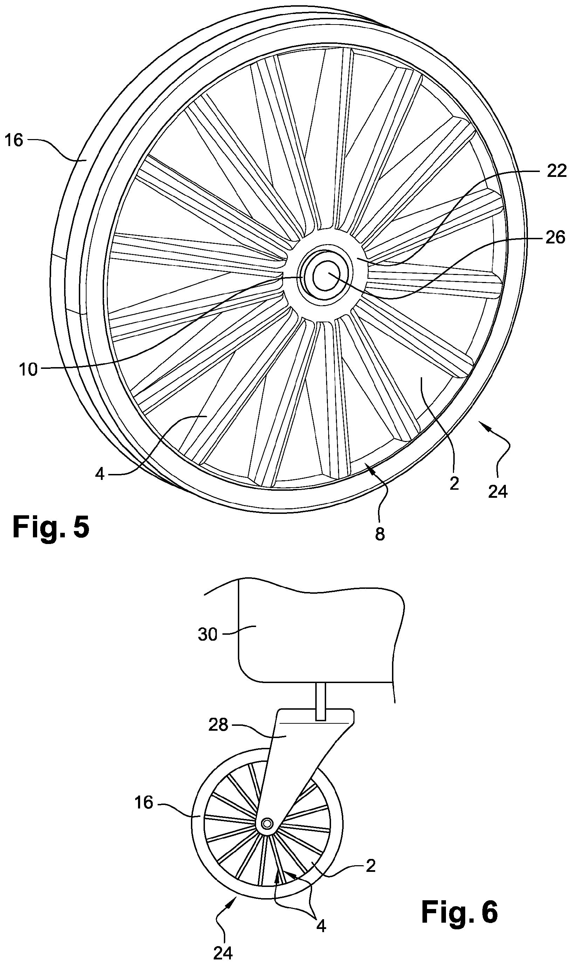

La figure 5 représente en perspective la roue complète 24, l'un des flasques 1 étant engagé dans l'élément 12 en élastomère, l'autre flasque 1 étant masqué. Chaque paire d'éléments 4 encadre une rainure radiale 20 de l'élément 12, qui est masquée. En partie centrale, le fourreau 26 est monté dans le tronc de cylindre d'une partie centrale 10 de chaque flasque, elle-même montée dans la partie centrale 22 formée par le tronc de cylindre de l'élément 12.

La figure 6 représente de façon partielle et simplifiée un bac de collecte de déchets comprenant au moins une roue 24 selon l'invention, montée en compression entre deux flancs d'une chape métallique 28, l'un des flancs étant masqué. Typiquement, le bac 30 de collecte de déchets comprend au moins les deux roues directrices avant qui sont réalisées selon l'invention.

L'invention n'est pas limitée au mode de réalisation présenté, et l'homme du métier pourra, sans sortir du cadre de celle-ci, utiliser divers éléments techniques et/ou diverses variantes déjà connues de l'état de la technique, si ces éléments et/ou variantes ne sont pas incompatibles avec l'invention. A titre d'exemple, les flasques peuvent être réalisés en différents types de matériau plastique, renforcé ou non renforcé, mais aussi en métal, par exemple en aluminium, ou en bronze ou en acier etc.

## Revendications

1. Arrangement de Roue (24) et chape de roue (28) pour bac (30) de collecte de déchets, de préférence pour bac à quatre roues, la roue étant montée dans la chape de roue (28) et insérée entre deux flancs de la chape (28), cette roue (24) comprenant un fourreau (26) formant palier pour un axe de roue, et montés co-axialement avec ce fourreau (26), la roue comprenant en outre une jante et une bande de roulement (16), dans lequel la bande de roulement (16) est venue de matière avec un flanc (14) s'étendant radialement depuis une partie centrale (22), la jante comprenant deux flasques (1) qui prennent le flanc (14) en sandwich et permettent une compression axiale de ce flanc (14), le flanc étant mis en compression axiale, par et entre les deux flasques, qui sont eux-mêmes mis en compression axiale, par et entre les deux flancs de chape (28),
**caractérisé en ce que** :
- la roue est de type à élastomère plein,
- la bande de roulement est en élastomère,
- au moins l'un, ou chacun des deux flasques (1), est déformable axialement sous contrainte, de sorte que la longueur axiale de ce flasque est plus faible lorsque, dans la roue montée, il est mis en compression axiale par un flanc de chape (28), que lorsque, dans la roue non montée, il n'est pas en compression.

2. Arrangement selon la revendication 1, dans laquelle, dans une direction axiale, une épaisseur minimale du flanc est d'au moins 20% d'une largeur maximum de la bande de roulement.

3. Arrangement selon l'une quelconque des revendications 1 et 2, dans laquelle les flasques réalisent une compression axiale du flanc suffisante pour sensiblement interdire un mouvement relatif flasques/flanc.

4. Arrangement selon l'une quelconque des revendications 1 et 2, dans laquelle le flanc est un flanc droit.

5. Arrangement selon l'une quelconque des revendications 1 à 4, dans laquelle chacun des deux flasques (1) comprend des moyens d'engrènement du flanc, pour interdire une rotation différentielle entre l'un quelconque des flasques et la bande de roulement.

6. Arrangement selon la revendication 5, dans laquelle les moyens d'engrènement des flasques comprennent, sur au moins un flasque, des nervures radiales (4) conformées pour accroître la rigidité du flasque dans la direction axiale.

7. Arrangement selon la revendication 6, dans laquelle au moins une nervure (4) d'un flasque comprend un évidement radial (6) configuré pour encadrer sans jeu une nervure radiale (20) sur le flanc (14).

8. Arrangement selon l'une quelconque des revendications 1 à 7, dans laquelle la bande de roulement (16) est une couronne externe circonférentielle au flanc (14), formant un bord circonférentiel (18) dépassant axialement du flanc (14) de part et d'autre de celui-ci, les deux flasques (1) étant engagés sous ce bord circonférentiel (18).

9. Arrangement selon l'une quelconque des revendications 1 à 8, dans laquelle la plus grande partie au moins, et de préférence la totalité de la masse du flanc et de la bande de roulement est formée par un élastomère recyclé, par exemple de la poudre de pneumatique usagé, et chaque flasque (1) est réalisé en plastique moulé ou en métal.

10. Arrangement selon la revendication 8 à 9, dans laquelle chaque flasque déformable axialement sous contrainte comprend des nervures radiales (4) qui s'engagent à leurs extrémités extérieures sous ledit bord circonférentiel (18), la compression axiale du flasque produisant une augmentation du diamètre extérieur de ces extrémités, qui viennent en appui sur une partie radialement intérieure dudit bord circonférentiel (18).

11. Bac (30) de collecte de déchets, de préférence à quatre roues de contenance comprise entre 400 et 1700 litres, bornes comprises, **caractérisé en ce qu'**il comprend au moins un arrangement selon l'une des revendications 1 à 10.

## Patentansprüche

1. Radanordnung (24) und Radgehäuse (28) für einen Abfallsammelbehälter (30), vorzugsweise für einen vierrädrigen Behälter, wobei das Rad im Radgehäuse (28) montiert und zwischen zwei Flanken des Radgehäuses (28) eingesetzt ist, wobei dieses Rad (24) eine Hülse (26) aufweist, die ein Lager für eine Radachse bildet, und koaxial mit dieser Hülse (26) gelagert, das Rad ferner eine Felge und eine Lauffläche (16) aufweist, wobei die Lauffläche (16) mit einer Flanke (14) einstückig ist, die sich radial von einem zentralen Teil (22) erstreckt, wobei die Felge zwei Flansche (1) umfasst, die die Flanke (14) sandwichartig umschließen und eine axiale Kompression dieser Flanke (14) ermöglichen, wobei die Flanke durch und zwischen den beiden Flanschen in axiale Kompression versetzt wird, die selbst durch und zwischen den beiden Flanken des Gehäuses (28) in axiale Kompression versetzt sind, **dadurch gekennzeichnet, dass:**
- das Rad vom Typ Vollelastomer ist,
- die Lauffläche aus Elastomer besteht,
- mindestens einer oder jeder der beiden Flansche (1) unter Spannung axial verformbar ist, so dass die axiale Länge dieses Flansches, wenn er im montierten Rad durch eine Flanke des Gehäuses (28) in axiale Kompression versetzt wird, kürzer ist, als wenn er im nicht montierten Rad nicht unter Kompression steht.

2. Anordnung nach Anspruch 1, wobei in axialer Richtung eine minimale Flankenstärke mindestens 20% einer maximalen Laufflächenbreite beträgt.

3. Anordnung nach einem der Ansprüche 1 und 2, wobei die Flansche eine ausreichende axiale Kompression der Flanke erreichen, um eine relative Flansch/Flanke-Bewegung im Wesentlichen zu verhindern.

4. Anordnung nach einem der Ansprüche 1 und 2, wobei die Flanke eine gerade Flanke ist.

5. Anordnung nach einem der Ansprüche 1 bis 4, wobei jeder der beiden Flansche (1) Flanken-Einrasteinrichtungen umfasst, um eine differentielle Drehung zwischen einem der Flansche und der Lauffläche zu verhindern.

6. Anordnung nach Anspruch 5, wobei die Flansch-Einrasteinrichtungen an mindestens einem Flansch radiale Rippen (4) umfassen, die geformt sind, um die Steifigkeit des Flansches in axialer Richtung zu erhöhen.

7. Anordnung nach Anspruch 6, wobei mindestens eine Rippe (4) eines Flansches eine radiale Aussparung (6) umfasst, die konfiguriert ist, um eine radiale Rippe (20) an der Flanke (14) ohne Spiel zu umschließen.

8. Anordnung nach einem der Ansprüche 1 bis 7, wobei die Lauffläche (16) ein äußerer umlaufender Ring an der Flanke (14) ist, der einen umlaufenden Rand (18) bildet, der axial von der Flanke (14) auf beiden Seiten davon vorsteht, wobei die beiden Flansche (1) unter diesem umlaufenden Rand (18) eingreifen.

9. Anordnung nach einem der Ansprüche 1 bis 8, wobei zumindest der größte Teil und vorzugsweise die gesamte Masse der Flanke und der Lauffläche aus einem wiederverwerteten Elastomer, zum Beispiel Altreifenpulver, hergestellt ist und jeder Flansch (1) aus geformtem Kunststoff oder Metall hergestellt ist.

10. Anordnung nach Anspruch 8 bis 9, wobei jeder axial verformbare Flansch unter Spannung radiale Rippen (4) umfasst, die an ihren äußeren Enden unter dem umlaufenden Rand (18) eingreifen, wobei die axiale Kompression des Flansches eine Vergrößerung des Außendurchmessers dieser Enden erzeugt, die sich auf einem radial inneren Abschnitt des umlaufenden Randes (18) abstützen.

11. Abfallsammelbehälter (30), vorzugsweise mit vier Rädern mit einem Fassungsvermögen von 400 bis 1700 Litern, einschließlich Anschlüssen, **dadurch gekennzeichnet, dass** er mindestens eine Anordnung nach einem der Ansprüche 1 bis 10 umfasst.

## Claims

1. Arrangement of a wheel (24) and wheel clevis (28) for a waste collection bin (30), preferably for a bin having four wheels, the wheel being mounted in the wheel clevis (28) and inserted between two flanks of the clevis (28), this wheel (24) comprising a sheath (26) which forms a bearing for a wheel axle, and said flanks being mounted co-axially with respect to this sheath (26), the wheel further comprising a rim and a tread (16), the tread (16) being integral with a flank (14) extending radially from a central portion (22), the rim comprising two flanges (1) which sandwich the flank (14) and allow axial compression of this flank (14), the flank being subjected to axial compression by and between the two flanges which are themselves subjected to axial compression by and between the two flanks of the clevis (28), **characterized in that:**
- the wheel is a solid elastomer wheel,
- the tread is made of elastomer,
- at least one, or each of the two flanges (1), can be axially deformed under stress, such that the axial length of this flange is shorter when subjected to axial compression by a flank of the clevis (28) in the mounted wheel than when not compressed in the unmounted wheel.

2. Arrangement according to claim 1, wherein, in an axial direction, a minimum thickness of the flank is at least 20% of a maximum width of the tread.

3. Arrangement according to either claim 1 or claim 2, wherein the flanges sufficiently axially compress the flank to substantially prevent a relative movement flanges/flank.

4. Arrangement according to either claim 1 or claim 2, wherein the flank is a right flank.

5. Arrangement according to any of claims 1 to 4, wherein each of the two flanges (1) comprises means for engaging the flank, in order to prevent a differential rotation between any of the flanges and the tread.

6. Arrangement according to claim 5, wherein the engagement means of the flanges comprise, on at least one flange, radial ribs (4) shaped so as to increase the rigidity of the flange in the axial direction.

7. Arrangement according to claim 6, wherein at least one rib (4) of a flange comprises a radial recess (6) designed to surround a radial rib (20) on the flank (14) without play.

8. Arrangement according to any of claims 1 to 7, wherein the tread (16) is an outer ring circumferential to the flank (14), which ring forms a circumferential edge (18) axially projecting from the flank (14) on both sides, the two flanges (1) being engaged underneath said circumferential edge (18).

9. Arrangement according to any of claims 1 to 8, wherein at least the greater portion, and preferably the whole mass of the flank and the tread is formed by a recycled elastomer, for example from powder from used tires, and each flange (1) is made of molded plastics material or metal.

10. Arrangement according to either claim 8 or claim 9, wherein each flange which is axially deformable under stress comprises radial ribs (4) which engage at their outer ends on said circumferential edge (18), the axial compression of the flange producing an increase in the outer diameter of these ends, which rest against a radially inner portion of said circumferential edge (18).

11. Waste collection bin (30), preferably having four wheels and a capacity of between 400 and 1700 liters inclusive, **characterized in that** it comprises at least one arrangement according to any of claims 1 to 10.
